# EUROPEAN PATENT APPLICATION

(11) **EP 4 583 380 A1**
(43) Date of publication of application: **09.07.2025**
(21) Application number: 23859224.0
(22) Date of filing: 24.08.2023
(51) Int. Cl.: H02K 11/215, H02K 11/20, H02K 5/02

(54) **AXIAL DISPLACEMENT MONITORING DEVICE FOR SHIELDED MOTOR ROTOR**

(30) Priority: 30.08.2022 CN 202211051504
(71) Applicant: Dongfang Electric Machinery Co., Ltd. of Dongfang Electric Group, Deyang, Sichuan 618000 (CN)
(72) Inventor: LIN, Kun, Deyang, Sichuan 618000 (CN); SUN, Libin, Deyang, Sichuan 618000 (CN); WU, Jun, Deyang, Sichuan 618000 (CN); LI, Shaobin, Deyang, Sichuan 618000 (CN); YANG, Pingping, Deyang, Sichuan 618000 (CN); LAN, Yong, Deyang, Sichuan 618000 (CN); JIANG, Feng, Deyang, Sichuan 618000 (CN); XIAO, Boyang, Deyang, Sichuan 618000 (CN); GAO, Jiaju, Deyang, Sichuan 618000 (CN); WEI, Yanqiang, Deyang, Sichuan 618000 (CN); WU, Guangyan, Deyang, Sichuan 618000 (CN); ZHU, Jinmei, Deyang, Sichuan 618000 (CN)
(74) Representative: Patrade A/S
(86) International application number: PCT/CN2023/114549
(87) International publication number: WO 2024/046191

(57) **Abstract**

The present invention discloses an axial displacement motoring device for the shielded motor rotor, which belongs to the technical field of motor. The device comprises a stationary part connected to a motor stator and a rotating part connected to a motor rotor; the stationary part comprises a stator iron core, wherein a central through-hole is configured inside the stator iron core, wherein a first winding and an identical second winding are spaced apart along an axial direction of the central through-hole and are fixed on a body of the stator iron core around an outer circumference of the central through-hole; the rotating part passing through the central through-hole inside the stator iron core, comprises a measuring rod and a permanent magnet configured inside the measuring rod, wherein the permanent magnet is located between the first winding and the second winding. The present invention can monitor the axial displacement of the shielded motor rotor in real time and accurately by external inspection and non-contact means, and also monitor the imbalanced axial force of the shielded motor rotor in time.

## Description

### FIELD OF TECHNOLOGY

The present invention relates to the technical field of an axial displacement monitoring device, particularly, it relates to an axial displacement monitoring device for a shielded motor rotor.

### BACKGROUND

A shielded motor is a kind of motor used for conveying highly toxic, corrosive, radioactive, flammable and explosive, precious liquid, as well as the liquid which may cause to significant harm after leakage. The shielded motor is directly connected with a pump impeller through a motor shaft to form a shield pump. The shield pump is a type of sealless pump and is sealed with a drive motor in a pressure vessel filled with pumping medium. The pressure vessel only has a static seal and eliminate a rotating seal part in the centrifugal pump, thereby achieving a complete sealing without leakage. For a long time, the axial displacement of the shielded motor rotor caused by the imbalanced axial force of the pump has resulted in the wear accident for the thrust bearing of the shielded motor.

Due to the completely sealed nature of the shielded motor (a rotating member cannot be observed from the outside), the axial displacement of the rotor cannot be detected by normal means, which ultimately leads to further deterioration of shielded motor failures.

The technical solutions in the prior art are as follows:
1) A magnetostrictive displacement sensor can achieve non-contact displacement measurement by using the magnetostrictive effect, and it mainly consists of a movable magnetic ring, a wire waveguide, a protective tube, a return wire, a bar magnet, a measuring circuit, etc. Due to its principle and structure, it cannot be applied to high temperature, high pressure, corrosive and other medium environment.
2) An eddy current displacement sensor is a non-contact linearized measurement equipment, and can accurately measure the static and dynamic change of the relative displacements between the measured target (must be metal) and the probe end. The measured target has a certain area to achieve accurate measurement, failing to be arranged in the shielded motor having a small space. As it is limited by a basic principle of eddy current effect, the probe cannot be applied to the shielded motor in high-pressure environment and various types of corrosive medium environment, restricting the application in the different environment.
3) A linear variable differential transformer (LVDT) displacement sensor mainly consists of coils, an iron core, etc., and the iron core needs to choose the materials featuring large resistivity, high permeability, and strong magnetic saturation induction. The iron core is located in the middle of the sensor coils. Once a power is supplied, a primary coil inputs alternating current (ac) excitation current, then the secondary coil generates electric potential. The two magnetic pole coils are connected in series in reverse polarity to output a voltage signal, thereby achieving the transformation of displacement into an electrical signal. This sensor must demand on a power supply, providing high-frequency excitation to achieve the function, and must use precision parts to form an oscillator. The sensor also asks for high demand on the measuring circuit, requiring precision parts to form a drive and signal detecting circuit to maintain measuring accuracy and stability of the sensor, the processing is substantially complicated, leading to increased manufacturing costs and reduced reliability of the sensor.

Other displacement sensors based on different principles, such as a vibration in a string, an ultrasonic wave, a laser, a magnetic grid and others, cannot be applied to the measuring of the axial displacement for the shielded motor rotor due to the limitations of their structure or the application environment.

### SUMMARY

In order to overcome the above-mentioned technical defects, the present invention provides an axial displacement monitoring for the shielded motor rotor, which can monitor the axial shaft displacement of the shielded motor rotor in real time and accurately by external inspection and non-contact means, and also monitor the imbalanced axial force of the shielded motor rotor in time to prevent further deterioration of the failure.

In order to achieve the above purpose, the technical solution of the present invention is as follows:
an axial displacement monitoring device for a shielded motor rotor, peculiar in that it comprises a stationary part connected to a motor stator and a rotating part connected to a motor rotor; a central through-hole is configured inside the stationary part, wherein a first winding and an identical second winding are spaced apart along the axial direction of the central through-hole, wherein the first winding and the second winding are fixed on a body of the stator iron core around an outer circumference of the central through-hole; the rotating part passing through the central through-hole inside the stator iron core, comprises a measuring rod and a permanent magnet configured inside the measuring rod, wherein the permanent magnet is located between the first winding and the second winding for rotating with the motor rotor to generate an induced voltage between the first winding and the second winding, and for generating a voltage difference between the first winding and the second winding which can reflect an axial displacement of the motor rotor, when an axial displacement occurs in the motor rotor.

In an embodiment, the first winding and the second winding are fixed on a body of the stator iron core around the outer circumference of the central through-hole.

In an embodiment, each of the first winding and the second winding comprises at least one coil.

In an embodiment, the first winding comprises a coil a and a coil b connected in series, and the second winding comprises a coil c and a coil d connected in series; the first winding and the second winding are connected in parallel to form an output terminal a and a terminal b that can be used to detect a voltage difference between the first winding and the second winding.

In an embodiment, the stator iron core is made of a magnetically conductive material.

In an embodiment, an end cap is provided on an open end on the measuring rod for sealing the permanent magnet, and the measuring rod and the end cap are sealed by welding.

In an embodiment, both the measuring rod and the end cap are made of a corrosion-resistant, weakly magnetic or non-magnetic material.

In an embodiment, a pressure-bearing bushing is configured between the stationary part and the rotating part, and passes through an interior of the stator iron core and wraps around an exterior of the entire rotating part, for sealing and isolating an interior of the motor from an external environment.

In an embodiment, the stator iron core is mounted to the body of the motor stator by means of a fixing screw and a fixing nut.

In an embodiment, the permanent magnet is embedded in the measuring rod.

In conclusion, the present invention provides advantages as follows:
1. In terms of the medium environment such as high temperature, high pressure, and corrosion where the shielded motor is located, the axial displacement monitoring device of the present invention utilizes an electromagnetic induction principle to achieve the measurement of the axial displacement of the shielded motor rotor in real time;
2. The axial displacement monitoring device of the present invention is designed with no power supply, to achieve the measurement of the axial displacement of the shielded motor rotor without external power supply.
3. In the present invention, the measuring rod and end cap are made of the corrosion-resistant, weakly magnetic or non-magnetic material for protecting the permanent magnet.
4. In the present invention, a pressure-bearing bushing configured between the stationary part and the rotating part acts as a part of the pressure boundary of shielded motor, achieving a seal and isolation between the motor interior and external environment and broaden the application environment of the monitoring device, and therefore the monitoring device can be broadly used in high-pressure, and corrosive environment.
5. In the present invention, two windings structure avoid measurement error resulting from changes in magnetic induction intensity of the permanent magnet caused by changes in the medium temperature.

### Brief Description of Drawings

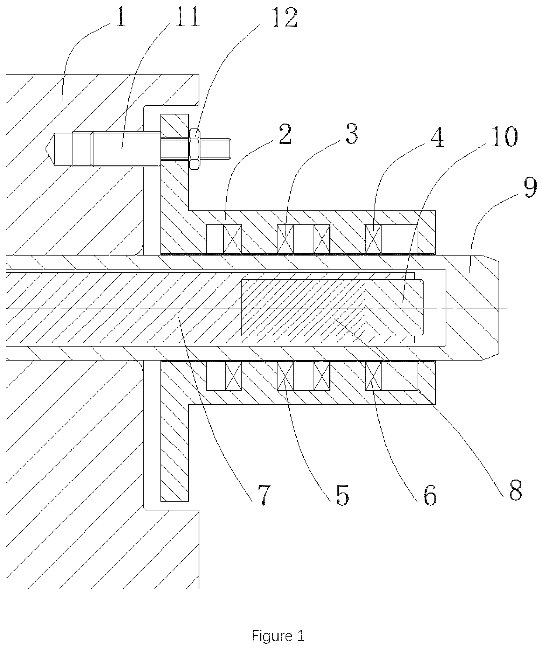

Figure 1 shows a structural diagram of the monitoring device of the present invention;
Figure 2 shows the state of rotor in its normal position; and
Figure 3 shows the state of rotor in displacement position;

### Reference numbers:

1-motor stator, 2-stator iron core, 3- coil a, 4-coil c, 5- coil b, 6- coil d, 7-measuring rod, 8- permanent magnet, 9-pressure-bearing bushing, 10-end cap, 11-fixing screw, 12-fixing nut, 13- terminal a, 14-ternimal b.

### Detailed Description of the Invention

To make the purpose, technical solutions and advantages of the embodiments of the present invention clearer, the technical solutions in the embodiments of the present invention are clearly and completely described below in conjunction with the accompanying drawings in the embodiments of the present invention. It is clear that the embodiments described are a part of the embodiments of the present invention and not all of the embodiments. The components of embodiments of the present invention generally described and illustrated in the accompanying drawings herein may be arranged and designed in a variety of different configurations.

Accordingly, the following detailed description of embodiments of the present invention provided in the accompanying drawings is not intended to limit the scope of the present invention, but rather represents only selected embodiments of the present invention. Based on the embodiments in the present invention, all other embodiments obtained by one skilled in the art without creative work fall within the protection scope of the present invention.

It should be noted that similar reference numbers and letters denote similar objects in the following accompanying drawings, and therefore, once an object is defined in an accompanying drawing, no further definition or explanation of the object is required in the subsequent accompanying drawings.

In the description of the present invention, it should be noted that the terms "above", "vertical", "inside", "outside", etc. indicating orientation or positional relationships are based on the orientation or positional relationships shown in the accompanying drawings, or on the orientation or positional relationships in which the products of the invention are generally placed when used, or on the orientation or positional relationships commonly understood by one skilled in the art. The terms are used only for the purpose of facilitating the description of the present invention and simplifying the description, and do not indicate or imply that the device or element referred to must be of a particular orientation, be constructed and be operated with a particular orientation, and therefore it should not be construed as a limitation of the present invention. Furthermore, the terms "first", "second", etc. are used only to distinguish the description and are not to be regarded as indicating or implying relative importance.

In the description of the present invention, unless otherwise clearly specified and limited, it should also be noted that, the terms "configure", "mount", "connect" should be understood broadly. For example, such term may be a fixed connection, or a removable connection, or an integrated connection; or it may be a mechanical connection, or electric connection; or it may be a direct connection, or an indirect connection through an intermediate medium; and it may be a connection within the two elements. For one skilled in the art, the specific meaning of the above terms in the present invention can be understood according to specific cases.

### Embodiment 1

Due to the shielded motor featuring a complete seal (the rotating parts cannot be observed from the outside), the axial displacement of the motor rotor cannot be monitored by normal means, which ultimately leads to further deterioration of the shielded motor failures. The present embodiment provides an axial displacement monitoring device for the shielded motor rotor, where the axial displacement of the shielded motor rotor can be monitored in real time and accurately by external inspection and non-contact means, so that the imbalanced axial force of the shielded motor rotor can be monitored in time, and further deterioration of the failure can be eliminated.

Specifically, the device of the present invention comprises a stationary part connected to a motor stator and a rotating part connected to a motor rotor.

The stationary part comprises a stator iron core 2, wherein a central through-hole is configured inside the stator iron core 2 for allowing the rotating part to integrally pass through. A first winding and a second winding are identical and are spaced apart along the axial direction of the central through-hole inside the stator iron core. Further, the first winding and the second winding are fixed on the body of the stator iron core around the outer circumference of the central through-hole.

Each of a first winding and a second winding comprises at least one coil. Preferably, the windings may be a plurality of coils connected in series in order to increase the winding voltage. For easy measurement, the coil(s) of the first winding and the second winding should be identical in compositional structure and arrangement orientation.

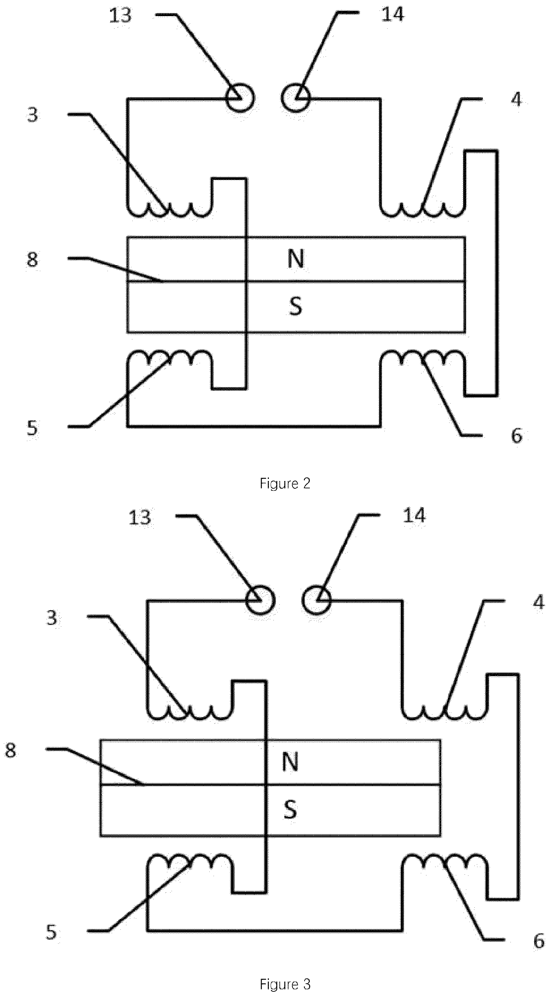

As shown in Figure 2 or Figure 3, in the present embodiment, the first winding comprises a coil a 3 and a coil b 5, both of which are distributed circumferentially on the circular surface of the stator iron core along radial direction, and the coil a 3 and the coil b 5 are connected in series. Similarly, the second winding comprises a coil c 4 and a coil d 6 being connected in series, and the second winding comprises a coil c 4 and a coil d 6 distributed circumferentially on the circular surface of the stator iron core along radial direction. The first winding and the second winding are connected in parallel and form an output terminal a 13 and a terminal b 14 that can be used to detect a voltage difference between the first winding and the second winding.

The stator iron core 2 is made of magnetically conductive materials and together with the coil a 3, coil b 5, coil c 4, and coil d 6 form the stationary part of the monitoring device, and the stationary part is connected to the shielded motor stator 1 by means of a fixing screw 11 and a fixing nut 12. The stator iron core 2 mainly functions as a generation of a magnetic circuit for the whole monitoring device, and meanwhile fixes the coil a 3, coil b 5, coil c 4 and coil d 6.

The rotating part integrally passing through the central through-hole inside the stator iron core 2, comprises a measuring rod 7 and a permanent magnet 8 configured inside the measuring rod 7. When initially mounted, the permanent magnet is located in a middle position between the first winding and the second winding, with the same effective length of electromagnetic induction on the first winding as that on the second winding. The permanent magnet 8 is used to rotate with the motor rotor to generate an induced voltage between the first winding and the second winding, and is used to generate a voltage difference between the terminal a 13 and the terminal b 14 which can reflect the axial displacement of the motor rotor, when an axial displacement occurs in the motor rotor.

The permanent magnet 8 is embedded in the measuring rod 7. An open end of the measuring rod 7 is sealed by an end cap 10. Both the measuring rod 7 and the end cap 10 are made of corrosion-resistant, weakly magnetic or non-magnetic materials. The measuring rod 7 and the end cap 10 are sealed by welding to avoid medium contamination or corrosion for the permanent magnet 8.

The measuring rod 7, the permanent magnet 8 and the end cap 10 together form a rotating part of the monitoring device, which is connected to the shielded motor rotor through the measuring rod 7.

The working principle of the monitoring device is as follows:
The monitoring device mainly adopts an electromagnetic induction principle. Specifically, when the shielded motor rotor rotates, the measuring rod 7 drives the permanent magnet 8 to rotate and an induced voltage on the first winding and the second winding is generated, respectively. As the first winding and the second winding are connected in series, a voltage difference between the first winding and the second winding is generated on the terminal a 13 and the terminal b14. The first winding and the second winding is designed to avoid the measurement error resulting from changes in magnetic induction intensity of the permanent magnet caused by changes in the medium temperature.

When the permanent magnet 8 on the rotating part of the monitoring device is in the middle position between the first winding and the second winding, voltage generated across the terminal a 13 and terminal b 14 is zero (if the voltage is not zero at an initial use, it can be adjusted by turning the fixing screw 11 to adjust the voltage to zero), due to the same effective length of the electromagnetic induction by the permanent magnet 8 on the first winding as that on the second winding. When the axial displacement occurs in the shielded motor rotor, it drives the measuring rod 7 and the permanent magnet 8 to move axially. Therefore, the effective length of the electromagnetic induction by the permanent magnet 8 on the first winding is different from that on the second winding, resulting in potential difference between first winding and second winding, and generating a voltage across the terminal a 13 and the terminal b 14. This voltage increases with the increased distance of the permanent magnet 8 away from the middle position, and it depends linearly on the distance to some extent. The axial displacement of the shielded motor rotor can be accurately measured through the relationship between the distance of the permanent magnet 8 away from the middle position and the voltage across the terminal a 13 and the terminal b 14, so as to achieve the monitoring of the axial displacement of the shielded motor rotor.

### Embodiment 2

The present embodiment provides an axial displacement monitoring device for the shielded motor rotor, and on the basis of Embodiment 1, the present embodiment further comprises a pressure-bearing bushing 9 configured between the stationary part and rotating part of the monitoring device. The pressure-bearing bushing 9 passes through the interior of the stator iron core 2 and wraps around the exterior of the entire rotating part, for sealing and isolating the interior of the motor from the external environment. The pressure-bearing bushing 9 is mainly used to form a pressure boundary herein to prevent leakage of the medium inside the shielded motor to the external environment. The device is made of a corrosion resistant, weakly magnetic, or non-magnetic materials that can bear the pressure inside the shielded motor.

Although the specific embodiments of the present invention are described in detail in conjunction with the accompanying drawings, they should not be construed as limiting the protection scope of the present invention. Within the scope described in the claims, the various modifications and alterations that can be made by one skilled in the art without creative work are still within the protection scope of the present invention.

The above embodiments are only the better embodiments of the present invention, not any form of restriction on the present invention, any simple modification or equivalent change to the above embodiment based on the technical substance of the present invention, all fall within the protection scope of the present invention.

## Claims

1. An axial displacement monitoring device for a shielded motor rotor, **characterized in that**,
the axial displacement monitoring device comprises a stationary part connected to a motor stator (1) and a rotating part connected to a motor rotor; the stationary part comprises a stator iron core (2), wherein a central through-hole is configured inside the stator iron core (2), wherein a first winding and an identical second winding are spaced apart along an axial direction of the central through-hole and are fixed on a body of the stator iron core around an outer circumference of the central through-hole and; the rotating part passing through the central through-hole inside the stator iron core (2), comprises a measuring rod (7) and a permanent magnet (8) configured inside the measuring rod (7), wherein the permanent magnet (8) is located between the first winding and the second winding for generating an induced voltage between the first winding and the second winding when the motor rotor rotates, and for generating a voltage difference between the first winding and the second winding which reflects an axial displacement of the motor rotor, when an axial displacement occurs in the motor rotor.

2. The axial displacement monitoring device for a shielded motor rotor of claim 1, **characterized in that**,
the first winding and the second winding comprises at least one coil, respectively.

3. The axial displacement monitoring device for a shielded motor rotor of any one of claim 1 or 2, **characterized in that**,
the first winding comprises a coil a (3) and a coil b (5), the coil a (3) and the coil b (5) are connected in series, and the second winding comprises a coil c (4) and a coil d (6), the coil c (4) and the coil d (6) are connected in series; the first winding and the second winding are connected in parallel to form an output terminal a (13) and a terminal b (14) used for detecting a voltage difference between the first winding and the second winding.

4. The axial displacement monitoring device for a shielded motor rotor of claim 1, **characterized in that**,
the stator iron core (2) is made of a magnetically conductive material.

5. The axial displacement monitoring device for a shielded motor rotor of claim 1, **characterized in that**,
the stator iron core (2) is connected to the motor stator (1) by means of a fixing screw (11) and a fixing nut (12).

6. The axial displacement monitoring device for a shielded motor rotor of claim 1, **characterized in that**,
an open end of the measuring rod (7) is sealed by an end cap (10) for the permanent magnet (8), and the measuring rod (7) and the end cap (10) are sealed by welding.

7. The axial displacement monitoring device for a shielded motor rotor of claim 6, **characterized in that**,
the measuring rod (7) and the end cap (10) are made of corrosion-resistant, weakly magnetic or non-magnetic materials.

8. The axial displacement monitoring device for a shielded motor rotor of claim 1, **characterized in that**,
a pressure-bearing bushing (9) is configured between the stationary part and rotating part, and passes through the interior of the stator iron core (2) and wraps around the exterior of the entire rotating part, for sealing and isolating the interior of the motor from the external environment.

9. The axial displacement monitoring device for a shielded motor rotor of claim 1, **characterized in that**,
the permanent magnet (8) is embedded in the measuring rod (7).
